# FASCICULE DE BREVET EUROPEEN

(11) **EP 4 429 949 B1**
(45) Date de publication et mention de la délivrance du brevet: **15.10.2025**
(21) Numéro de dépôt: 22814039.8
(22) Date de dépôt: 08.11.2022
(51) Int. Cl.: B64C 11/38, F04B 1/22, F15B 15/18, F04B 9/02

(54) **POMPE HYDRAULIQUE RÉVERSIBLE POUR LE CALAGE DE PAS D'HÉLICE, SYSTÈME HYDRAULIQUE, TURBOPROPULSEUR ET AÉRONEF ASSOCIÉS**
UMKEHRBARE HYDRAULIKPUMPE ZUR EINSTELLUNG DES PROPELLERSPIELWINKELS UND ZUGEHÖRIGES HYDRAULIKSYSTEM, TURBOPROP UND FLUGZEUG
REVERSIBLE HYDRAULIC PUMP FOR SETTING PROPELLOR PITCH, AND ASSOCIATED HYDRAULIC SYSTEM, TURBOPROP AND AIRCRAFT

(30) Priorité: 12.11.2021 FR 2112000
(43) Date de publication de la demande: 18.09.2024
(73) Titulaire: SAFRAN AIRCRAFT ENGINES, 75015 Paris (FR)
(72) Inventeur: RODA, Jean Charles Olivier, 77550 Moissy Cramayel (FR); BERGON, Blaise, 77550 Moissy Cramayel (FR); DE WERGIFOSSE, Huguette, 77550 Moissy Cramayel (FR); FRANTZ, Caroline, 77550 Moissy Cramayel (FR); MILLIER, Vincent François Georges, 77550 Moissy Cramayel (FR)
(74) Mandataire: Casalonga
(86) Numéro de dépôt international: PCT/EP2022/081138
(87) Numéro de publication internationale: WO 2023/083813

(56) Documents cités:
- EP-A2- 2 674 622
- DE-A1- 102012 218 517
- FR-A1- 2 978 953
- FR-A6- 2 167 697

## Description

### Domaine technique de l'invention

L'invention concerne les systèmes d'actionnement hydraulique du pas d'hélice équipant les turbopropulseurs, et plus particulièrement les pompes délivrant une pression hydraulique pour activer de tels systèmes.

L'invention concerne en outre un système hydraulique pour le calage de pas d'hélice équipé d'une telle pompe, un turbopropulseur équipé d'un tel système hydraulique et un aéronef comprenant un tel turbopropulseur.

### Etat de la technique antérieure

Généralement, un aéronef équipé de turbopropulseurs « turbofan » en anglais, comprend des systèmes d'actionnement hydraulique du pas d'hélice équipant les turbopropulseurs. L'actionnement du pas d'une hélice est obtenu grâce à un dispositif de calage à l'hélice actionné par un vérin hydraulique.

Le vérin hydraulique et le dispositif de calage tournent avec l'hélice.

Généralement, une pompe hydraulique est implémentée dans la partie fixe du turbopropulseur et alimente le vérin en huile sous pression par l'intermédiaire d'un joint tournant.

Cependant, de l'huile s'échappe du joint tournant de sorte qu'il est nécessaire de récupérer l'huile ayant fui du joint tournant.

La récupération de l'huile nécessite l'ajout dans le turbopropulseur d'un système de récupération comprenant des pompes de récupération d'huile et un réservoir.

L'implantation d'un tel système nécessite de prévoir un espace dans le turbopropulseur et augmente la masse du turbopropulseur.

Il est connu de relier le vérin hydraulique directement à la pompe et d'entraîner la pompe hydraulique par un moteur électrique, la pompe hydraulique et le moteur électrique étant disposés dans un repère tournant lié à l'hélice.

L'alimentation du moteur électrique nécessite la mise en œuvre d'un transformateur électrique tournant.

Cependant, le rotor de la machine électrique doit être entraîné en permanence à la vitesse de l'hélice pour empêcher toute variation du calage de pas, conduisant à une consommation de puissance électrique et à un surdimensionnement thermique de la machine électrique.

En outre, l'implantation du transformateur électrique tournant augmente la masse du turbopropulseur.

Il est également connu de disposer une pompe hydraulique non réversible dans un repère tournant lié à l'hélice et de disposer un moteur électrique dans la partie fixe du turbopropulseur pour entraîner la pompe hydraulique.

Comme la pompe hydraulique n'est pas réversible, il est nécessaire de rajouter une vanne hydraulique pilotée entre la pompe et le vérin pour rentrer et sortir le piston du vérin.

Cependant, l'ajout d'une vanne hydraulique nécessite de prévoir un espace dans le turbocompresseur positionné dans le repère tournant et l'ajout de moyens de commande de la vanne disposée dans la partie fixe.

En outre, on connaît un système de calage de pas d'hélice comprenant une pompe hydraulique à pistons axiaux alimentant un vérin disposé dans un repère tournant lié à l'hélice d'un turbopropulseur.

Le système comporte des clapets configurés pour qu'en l'absence de la rotation d'un arbre de la pompe, la pompe ne délivre pas de fluide hydraulique malgré l'entraînement du corps de la pompe à la vitesse de l'hélice. La pompe est entraînée par un moteur électrique.

Cependant, le système ne permet pas d'obtenir une inversion du débit de la pompe lors de l'inversion du sens de rotation du moteur électrique.

Le document EP 2 674 622 divulgue une pompe hydraulique réversible fournissant un débit dans les deux sens de rotation d'un arbre de la pompe.

La pompe comporte deux pompes à pistons axiaux comprenant des lumières d'admissions déphasées de sorte qu'une pompe à pistons axiaux débite du fluide hydraulique lorsque la pompe tourne dans un sens, et de sorte que l'autre pompe à pistons axiaux débite du fluide hydraulique lorsque la pompe tourne dans l'autre sens.

Cependant, comme les deux pompes à pistons axiaux sont entraînées indépendamment du sens de rotation de l'arbre de la pompe hydraulique réversible, la pompe à pistons axiaux qui ne débite pas de fluide hydraulique cavite entraînant sa dégradation.

Le document DE102012218517 A1 divulgue une pompe hydraulique réversible pour l'entraînement hybride hydraulique d'un véhicule. Le document FR2167697 A6 divulgue un dispositif hydraulique de transmission de force, comprenant deux machines à pistons axiaux avec des couronnes connectées aux barillets par des embrayages et engrainées par une machine d'entraînement. Le document FR2978953 A1 divulgue un système de calage de pales avec une pompe axiale et deux cylindres distincts pour fournir la puissance hydraulique d'actionnement des pales. Le but de l'invention est de pallier tout ou partie de ces inconvénients.

### Exposé de l'invention

Au vu de ce qui précède, l'invention a pour objet une pompe hydraulique réversible pour le calage de pas d'hélice d'un turbopropulseur comprenant deux barillets reliés par un arbre de transmission.

Les premier et deuxième barillets sont reliés à l'arbre de transmission par l'intermédiaire de premiers et deuxièmes moyens d'embrayage de sorte que lorsque l'arbre de transmission tourne dans un premier sens, seul le premier barillet est entraîné en rotation par l'arbre de transmission, et de sorte que lorsque l'arbre de transmission tourne dans un deuxième sens opposé au premier sens, seul le deuxième barillet est entraîné en rotation par l'arbre de transmission.

Les moyens d'embrayage permettent d'entraîner seulement l'un des barillets selon le sens de rotation de l'arbre de transmission de sorte que l'autre barillet n'est pas entraîné empêchant qu'il soit soumis à des phénomènes de cavitation.

De préférence, les premiers moyens d'embrayage comprennent une première roue libre reliant le premier barillet à l'arbre de transmission lorsque l'arbre de transmission tourne dans le premier sens et désaccouple le premier barillet de l'arbre de transmission lorsque l'arbre de transmission tourne dans le deuxième sens, et les deuxièmes moyens d'embrayage comprennent une deuxième roue libre reliant le deuxième barillet à l'arbre de transmission lorsque l'arbre de transmission tourne dans le deuxième sens et désaccouple le deuxième barillet de l'arbre de transmission lorsque l'arbre de transmission tourne dans le premier sens.

Les moyens d'embrayage réalisés à partir de roues libres sont simples à réaliser.

Avantageusement, la pompe comprend en outre deux plateaux en biais symétriques et opposés et deux carters, le premier carter logeant le premier plateau et le premier barillet, et le deuxième carter logeant le deuxième plateau et le deuxième barillet, les premier et deuxième plateaux et les premier et deuxième carter étant fixes par rapport à l'arbre de transmission, des axes centraux des plateaux et des barillets étant coaxiaux.

De préférence, le deuxième carter comprend en outre un moteur électrique pour entraîner l'arbre de transmission, le moteur comportant un rotor formé sur l'arbre de transmission et un stator solidaire du deuxième carter.

Avantageusement, chaque barillet comprend des alésages et des cylindres creux coulissant dans les alésages lorsque ledit barillet est animé d'un mouvement de rotation, chaque cylindre creux comportant un perçage radial et un clapet d'aspiration de sorte qu'un fluide hydraulique s'écoule dans au moins un cylindre creux par l'intermédiaire du perçage et du clapet d'aspiration lors d'une phase d'aspiration du fluide dans ledit barillet par le cylindre creux.

De préférence, chaque barillet comprend des alésages et des cylindres creux coulissant dans les alésages lorsque ledit barillet est animé d'un mouvement de rotation, chaque cylindre creux comportant un perçage radial, la course du cylindre creux dans l'alésage associé au cylindre creux et la position du perçage radial dans le cylindre creux étant choisies de sorte qu'un fluide hydraulique s'écoule dans au moins un cylindre creux par l'intermédiaire du perçage lors d'une phase d'aspiration du fluide dans ledit barillet par le cylindre creux, et de sorte que le perçage dudit cylindre est recouvert par l'alésage associé audit cylindre creux pendant une phase de compression du fluide dans ledit barillet et une phase de refoulement du fluide hors dudit barillet par le cylindre creux.

Avantageusement, la pompe comprend des patins de glissement, les cylindres creux du premier barillet prenant appui sur le premier plateau par l'intermédiaire de patins de glissement, et les cylindres creux du deuxième barillet prenant appui sur le deuxième plateau par l'intermédiaire des patins de glissement, la pompe comprenant en outre un troisième carter cylindrique logeant les premier et deuxième carters, et destiné à contenir le fluide hydraulique aspiré lors de la phase d'aspiration, un axe central du troisième carter et un axe central de chaque plateau étant coaxiaux, le troisième carter tournant autour des premier et deuxième carters et comportant deux glaces de distribution situées chacune à l'extrémité d'un barillet différent opposée à l'extrémité dudit barillet en regard d'un plateau, chaque glace de distribution cylindrique comprenant une rainure concentrique reliée à une sortie différente du carter, chaque extrémité du cylindre creux opposée à l'extrémité dudit cylindre creux en contact avec un patin de glissement comprenant un clapet de refoulement de sorte que lors de la phase de refoulement, du fluide hydraulique sous pression comprimé par les cylindres creux de l'un des premier et deuxième barillets s'échappe du carter par l'une des sorties du carter reliée audit barillet, le troisième carter comprenant en outre une entrée destinée à alimenter le carter en fluide hydraulique.

Il est également proposé un système hydraulique pour le calage de pas d'hélice d'un turbopropulseur comprenant une pompe hydraulique réversible tel que défini précédemment, un vérin hydraulique double effet comportant deux entrées reliées chacune à une chambre différente du vérin et configuré pour entraîner un dispositif mécanique de calage de pas d'hélice, chaque entrée du vérin étant reliée à une sortie différente du troisième carter par l'intermédiaire de moyens de régulation de fluide hydraulique, et l'entrée du troisième carter étant reliée aux entrées du vérin par l'intermédiaire des moyens de régulation, les moyens de régulation étant configurés pour relier une première sortie du troisième carter à une première entrée du vérin et pour relier la deuxième entrée du vérin à l'entrée du troisième carter lorsque du fluide hydraulique sous pression s'écoule à travers la première sortie, et étant configurés pour relier la deuxième sortie du troisième carter à la deuxième entrée du vérin et pour relier la première entrée du vérin à l'entrée du troisième carter lorsque du fluide hydraulique sous pression s'écoule à travers la deuxième sortie.

Les moyens de régulation sont pilotés par la pression du fluide hydraulique débité par la pompe de sorte qu'ils fonctionnent de manière autonome sans interaction avec un dispositif de commande du turbopropulseur.

Il est également proposé un turbopropulseur comprenant une hélice de propulsion reliée à un dispositif mécanique de calage de pas d'hélice et un système hydraulique tel que défini précédemment, le vérin étant relié au dispositif mécanique de calage de pas d'hélice.

Avantageusement, le turbopropulseur comprend en outre des moyens de commande configurés pour commander le moteur électrique selon une valeur de consigne et l'angle de calage de l'hélice.

Il est également proposé un aéronef comportant un turbopropulseur tel que défini précédemment.

### Brève description des dessins

D'autres buts, caractéristiques et avantages de l'invention apparaîtront à la lecture de la description suivante, donnée uniquement à titre d'exemple non limitatif, et faite en référence aux dessins annexés sur lesquels :
[Fig 1] illustre schématiquement un aéronef selon l'invention ;
[Fig 2] illustre schématiquement une coupe partielle d'un turbopropulseur selon l'invention ;
[Fig 3] illustre schématiquement un exemple d'une roue libre selon l'invention ;
[Fig 4] illustre schématiquement un exemple d'un cylindre creux selon l'invention ;
[Fig 5] illustre schématiquement un autre exemple d'un cylindre creux selon l'invention, et
[Fig 6] illustre schématiquement un exemple de moyens de régulation selon l'invention.

### Exposé détaillé d'au moins un mode de réalisation

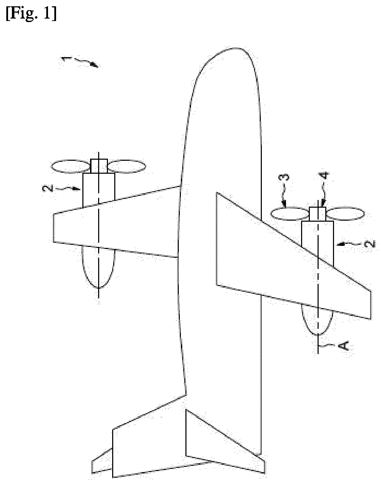

On se réfère à la figure 1 qui illustre schématiquement un exemple d'un aéronef 1 comportant des turbopropulseurs 2.

Chaque turbopropulseur 2 comporte une hélice 3 tournant autour d'un axe A du turbopropulseur 2 et un système hydraulique 4 pour le calage de pas de l'hélice 3.

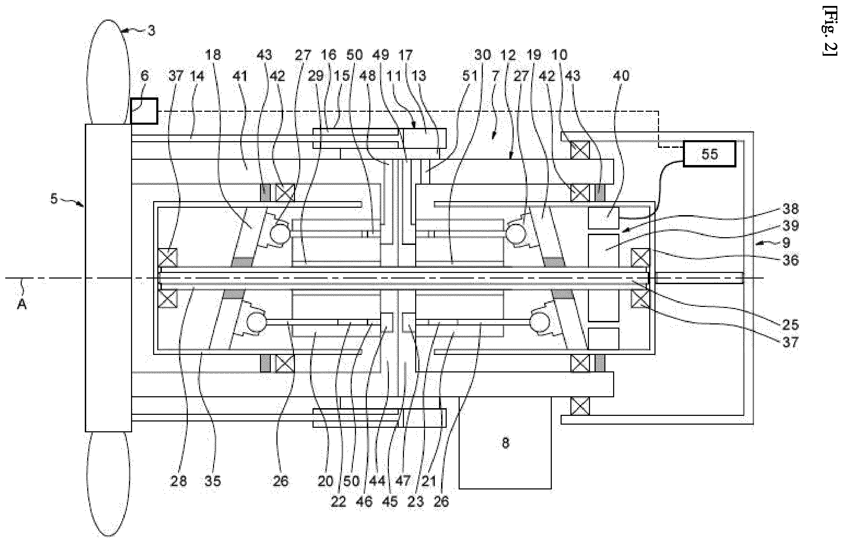

La figure 2 illustre schématiquement une coupe partielle du turbopropulseur 2 comportant le système hydraulique 4.

Le turbopropulseur 2 comprend un dispositif mécanique 5 de calage relié à l'hélice 3 faisant varier le pas de l'hélice 3, un capteur 6 d'angle du pas de l'hélice 3, un arbre de propulsion 7 relié au dispositif mécanique 5 et entraînant l'hélice, et des moyens de propulsion 8 entraînant l'arbre de propulsion 7.

Les moyens de propulsion 8 comportent par exemple des premières roues dentées coopérant avec des deuxièmes roues dentées de l'arbre de propulsion 7 formant une boîte de vitesse, et une turbine, les premières roues dentées étant entraînées par la turbine.

Le turbopropulseur comporte en outre une partie fixe 9 par rapport à l'arbre de propulsion 7.

Des roulements 10 relient l'arbre de propulsion 7 à la partie fixe 9.

Le système hydraulique 4 comprend un vérin 11 hydraulique double effet actionnant le dispositif mécanique 5 pour faire varier le pas de l'hélice 3, une pompe hydraulique réversible 12 et des moyens de régulation 13.

Le vérin 11 est alimenté par la pompe 12 par l'intermédiaire des moyens de régulation 13.

Le vérin 11 comprend un piston 14 relié au dispositif mécanique 5 et un cylindre 15 logeant le piston 14.

Le piston 14 et le cylindre 15 définissent deux chambres 16, 17, une première chambre 16 comportant une première entrée 160 (non représentée) reliée aux moyens de régulation 13, et la deuxième chambre 17 comportant une deuxième entrée 170 (non représentée) reliée aux moyens de régulation 13.

Le piston 14 est par exemple annulaire et entoure la pompe 12 de sorte que le système hydraulique 4 est plus compact nécessitant moins d'espace pour l'implantation dudit système dans l'arbre de propulsion 7.

La pompe hydraulique réversible 12 comprend deux plateaux 18, 19 en biais symétriques et opposés, et deux barillets 20, 21 comprenant des alésages 22, 23.

Les deux plateaux 18, 19 sont reliés entre eux par une tige 25.

La pompe 12 comprend en outre des cylindres creux 26 coulissant dans les alésages 22, 23 des barillets 20, 21.

Les cylindres creux 26 d'un premier barillet 20 prennent appui sur un premier plateau 18 par l'intermédiaire de patins 27 de glissement, et les cylindres creux 26 du deuxième barillet 21 prenant appui sur le deuxième plateau 19 par l'intermédiaire des patins 27 de glissement.

Les barillets 20, 21 sont reliés par un arbre de transmission 28.

L'arbre de transmission 28 comprend par exemple un évidemment central dans lequel est inséré la tige 25.

L'arbre de transmission 28, un axe central des plateaux 18, 19, et l'axe A sont coaxiaux.

Les premier 20 et deuxième 21 barillets sont reliés à l'arbre de transmission 28 par l'intermédiaire de premiers 29 et deuxièmes 30 moyens d'embrayage.

Lorsque l'arbre de transmission 28 tourne dans un premier sens de rotation, les premiers moyens d'embrayage 29 sont embrayés de sorte que l'arbre de transmission 28 entraîne le premier barillet 20, et les deuxièmes moyens d'embrayage 30 sont débrayés de sorte que l'arbre de transmission 28 n'entraîne pas le deuxième barillet 21.

Lorsque l'arbre de transmission 28 tourne dans le deuxième sens de rotation opposé au premier sens de rotation, les premiers moyens d'embrayage 29 sont débrayés de sorte que l'arbre de transmission 28 n'entraîne pas le premier barillet 20, et les deuxièmes moyens d'embrayage 30 sont embrayés de sorte que l'arbre de transmission 28 entraîne le deuxième barillet 21.

Lorsqu'un barillet 20, 21 est animé d'un mouvement de rotation, les cylindres creux 26 dudit barillet translatent dans les alésages dudit barillet de manière à aspirer un fluide hydraulique dans ledit barillet lors d'une phase d'aspiration, comprimer le fluide dans le barillet lors d'une phase de compression et refouler le fluide comprimé en dehors du barillet lors d'une phase de refoulement.

Les premiers 29 moyens d'embrayage comprennent par exemple une première roue libre reliant le premier barillet 20 à l'arbre de transmission 28 lorsque l'arbre de transmission tourne dans le premier sens et désaccouplant le premier barillet 20 de l'arbre de transmission 28 lorsque l'arbre de transmission tourne dans le deuxième sens.

Les deuxièmes 30 moyens d'embrayage comprennent par exemple une deuxième roue libre reliant le deuxième barillet 21 à l'arbre de transmission 28 lorsque l'arbre de transmission tourne dans le deuxième sens et désaccouplant le premier barillet de l'arbre de transmission lorsque l'arbre de transmission tourne dans le premier sens.

Comme les première et deuxième roues libres sont de structure identique, seule la première roue libre est détaillée.

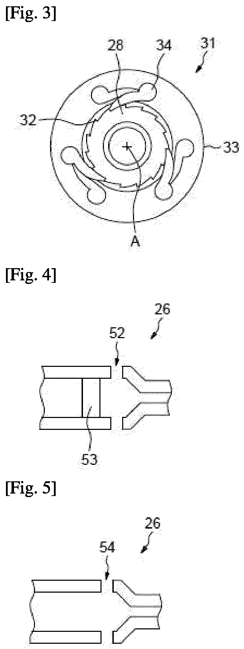

La figure 3 illustre un exemple de la première roue libre 31.

La première roue libre 31 comprend des encoches 32 réalisées sur l'arbre de transmission 28, une bague 33 insérée au centre du premier barillet 20 et des cliquets 34 coopérant avec les encoches 32.

Lors de la rotation de l'arbre de transmission 28 dans le premier sens, les cliquets 34 sont en prises dans les encoches 32 de sorte que l'arbre de transmission 28 entraîne la bague 33, et de sorte que lors de la rotation de l'arbre de transmission 28 dans le deuxième sens, les cliquets 34 ne sont plus en prises dans les encoches 32.

En se référant à la figure 2, la pompe 12 comprend en outre un premier carter 35 logeant le premier plateau 18, le premier barillet 20, et les cylindres creux 26 et les patins 27 de glissement associés.

La pompe 12 comprend un deuxième carter 36 logeant le deuxième plateau 19, le deuxième barillet 21, et les cylindres creux 26 et patins 27 de glissement associés.

La tige 25 relie en outre les premier et deuxième carters 35, 36 entre eux.

Le deuxième carter 36 est fixé à la partie fixe 9 de sorte que les premier et deuxième plateaux 19, 20, et les premier et deuxième carters 35, 36 sont fixes par rapport à l'arbre de transmission 26.

Les premier et deuxième carters 35, 36 comprennent des roulements 37 supportant l'arbre de transmission 28.

Le deuxième carter 36 comprend en outre un moteur électrique 38 entraînant l'arbre de transmission 28.

Le moteur 38 comporte un rotor 39 formé sur l'arbre de transmission 28 et un stator 40 solidaire du deuxième carter 36.

La pompe 12 comprend en outre un troisième carter 41 logeant les premier et deuxième carter 35, 36 comprenant les plateaux 18, 19, les premier et deuxième barillets 20, 21, et les cylindres creux 26.

L'arbre de propulsion 7 (« rotor fan ») est formé par le troisième carter 41 de la pompe 12.

Le troisième carter 41 étanche contient le fluide hydraulique aspiré lors de la phase d'aspiration.

Les premier et deuxième carters 35, 36 sont dimensionnés de sorte que le fluide hydraulique s'écoule vers les barillets 20, 21.

Un axe central du troisième carter 41 et un axe central de chaque plateau 18, 19 sont coaxiaux.

Le troisième carter 41 est solidaire du dispositif 5 de sorte qu'il tourne à la vitesse de l'hélice 3, et est relié au premier et deuxième carters 35, 36 par des roulements 42 et des joints 43 pour empêcher que le fluide hydraulique d'échappe de la pompe 12.

La vitesse de rotation du troisième carter 41 est décorrélée de la vitesse de rotation de l'arbre de transmission 28.

Le troisième carter 41 comprend deux glaces de distribution 44, 45 cylindriques situées chacune à l'extrémité d'un barillet 20, 21 différent et opposée à l'extrémité dudit barillet en regard d'un plateau 18, 19.

Chaque glace de distribution 44, 45 comprend une rainure 46, 47 concentrique reliée à une sortie 48, 49 différente du troisième carter 41.

Le premier barillet 20 est relié à la première sortie 48 du troisième carter 41 et le deuxième barillet est relié à la deuxième sortie 49 du troisième carter 41.

Les sorties 48, 49 du troisième carter 41sont reliées aux moyens de régulation 13.

La pompe 12 délivre par exemple le fluide hydraulique à une pression jusqu'à 350 bars permettant de réduire le volume du vérin 11 pour une force développée par le vérin 11 prédéterminée par rapport à des pressions de fluide hydraulique d'alimentation inférieures, nécessitant un vérin de plus grande taille pour développer ladite force prédéterminée.

Le fluide hydraulique comprend par exemple de l'huile.

Chaque extrémité du cylindre creux 26 des deux barillets 20, 21 opposée à l'extrémité dudit cylindre creux en contact avec un patin de glissement 27 comprend un clapet de refoulement 50 de sorte que lors de la phase de refoulement, du fluide hydraulique sous pression comprimé par les cylindres 26 creux de l'un des premier 20 et deuxième 21 barillets s'échappe du troisième carter 41 par l'une des sorties 48, 49 du troisième carter 41 reliée audit barillet, et de sorte que du fluide ne s'écoule pas dans les rainures 46, 47 lors des phases d'aspiration et de compression.

La troisième carter 41comprend en outre une entrée 51 reliée aux moyens de régulation 13.

Chaque plateau 18, 19 comporte une lunule d'alimentation de sorte que le fluide hydraulique s'écoule dans les cylindre creux 26 lors de la phase d'aspiration du fluide hydraulique par les cylindres creux et les alésages associés auxdits cylindres creux.

La figure 4 illustre un deuxième mode de réalisation du cylindre creux 26.

Le cylindre creux 26 comprend un perçage radial 52 et un clapet d'aspiration 53 de sorte que le fluide hydraulique s'écoule dans le cylindre creux par l'intermédiaire du perçage 52 et du clapet d'aspiration 53 lors de la phase d'aspiration.

Lors des phases de compression et de refoulement, le clapet d'aspiration empêche que du fluide hydraulique s'échappe dans le troisième carter 41 par le perçage 52.

Selon un troisième mode de réalisation (figure 5), le cylindre 26 comprend un perçage radial 54.

Dans ce mode de réalisation, la course du cylindre creux 26 dans l'alésage associé audit cylindre creux et la position du perçage 54 radial dans le cylindre creux 26 sont choisies de sorte que le fluide hydraulique s'écoule dans le cylindre 26 creux par l'intermédiaire du perçage 54 lors de la phase d'aspiration, et de sorte que le perçage 46 est recouvert par l'alésage associé audit cylindre pendant les phases de compression et de refoulement.

Lors de l'implémentation des deuxième et troisième modes de réalisation du cylindre 26, les plateaux 18, 19 ne comprennent pas de lunules d'alimentation facilitant la réalisation des plateaux 18, 19.

En outre, le troisième mode de réalisation du cylindre 26 permet de simplifier la réalisation dudit cylindre 26 creux par rapport au deuxième mode de réalisation du cylindre creux 26 en supprimant le clapet d'aspiration 53.

En se référant à nouveau à la figure 2, le turbopropulseur 2 comprend sur la partie fixe 9 des moyens de commande 55 reliés au moteur 38.

Les moyens de commande 55 pilotent le moteur 38 à partir de la mesure d'angle relevée par le capteur 6 et d'une consigne CONS reçue par exemple d'un contrôleur de l'aéronef 1, et sont réalisés par exemple à partir d'une unité de traitement configurée pour piloter le moteur 38 selon la valeur d'angle relevée par le capteur 6 et la consigne CONS.

Le capteur 6 communique avec les moyens de commande 55 par exemple par l'intermédiaire d'une liaison sans fil.

Les moyens de commande 55 pilotent le sens de rotation et la vitesse de rotation du moteur 38 de sorte que l'angle du pas hélice mesuré par le capteur 6 est égal à la consigne d'angle CONS.

Selon le sens de rotation du moteur 38, l'arbre de transmission 28 entraîne le premier 20 ou le deuxième 21 barillet générant un fluide sous pression alimentant la première 16 ou la deuxième 17 chambre du vérin 11.

Le vérin 11 actionne le dispositif 5.

Si le moteur 38 n'entraîne pas l'arbre de transmission 28 en rotation, aucun des premier et deuxième barillets ne comprime du fluide hydraulique de sorte que le vérin 11 n'est pas alimenté en fluide.

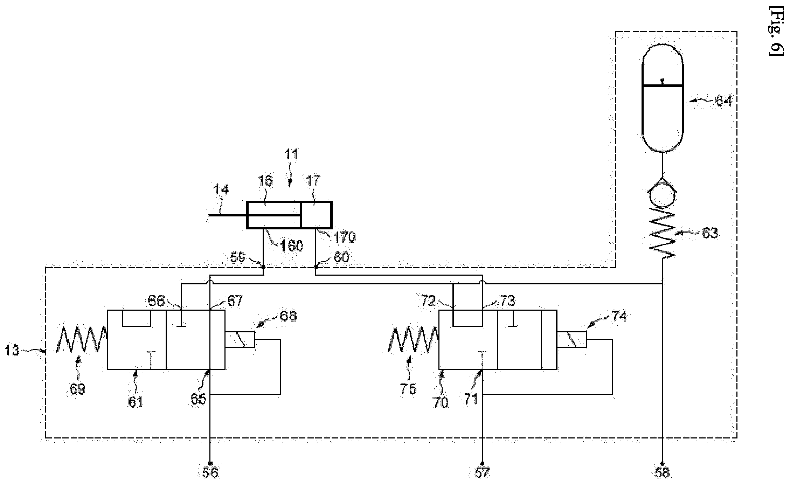

La figure 6 illustre un exemple de réalisation des moyens de régulation 13.

Les moyens de régulation 13 comprennent une première entrée 56 reliée à la première entrée 48 du troisième carter 41, une deuxième entrée 57 reliée à la deuxième entrée 49 du troisième carter 41, et une troisième entrée 58 reliée à la sortie 51 du troisième carter 41.

Les moyens de régulation 13 comprennent en outre une première sortie 59 reliée à la première entrée 160 du vérin 11 et une deuxième sortie 60 reliée à la deuxième entrée 170 du vérin 11.

Les moyens de régulation comprennent deux distributeurs 61, 62 hydrauliques du type deux positions et trois orifices « 3/2 », un clapet anti retour 63 et un accumulateur 64 hydraulique.

Le premier distributeur 61 comprend une entrée 65 reliée à la première entrée 56 des moyens de régulation 13, une première sortie 66 reliée à la troisième entrée 58 des moyens de régulation 13, une deuxième sortie 67 reliée à la première sortie 59 des moyens de régulation 13, une entrée de commande 68 reliée à la première entrée 65 dudit distributeur 61 et coopérant avec un ressort de rappel 69 dudit distributeur 61 pour piloter la position du distributeur.

Dans une première position du premier distributeur 61, lorsque le premier barillet 20 est entraîné en rotation et alimente en fluide l'entrée 65 dudit distributeur 61, l'entrée de commande 68 alimentée en fluide coopère avec le ressort de rappel 69 de sorte que l'entrée 65 alimente la deuxième sortie 67 du distributeur 61 pour alimenter la première chambre 16 du vérin 11, la première sortie 66 étant bouchée.

Dans une deuxième position du premier distributeur 61, lorsque le premier barillet 20 n'est pas entraîné en rotation, aucun fluide circule sur l'entrée 50 de sorte que l'entrée de commande 68 n'est pas alimentée en fluide. Dans cette position, l'entrée 65 est bouchée et les première et deuxième sorties 66, 67 sont reliées entre elles.

Le deuxième distributeur 70 comprend une entrée 71 reliée à la deuxième entrée 57 des moyens de régulation 13, une première sortie 72 reliée à la troisième entrée 58 des moyens de régulation 13, une deuxième sortie 73 reliée à la deuxième sortie 60 des moyens de régulation 13, une entrée de commande 74 reliée à la première entrée 71 dudit distributeur 70 et coopérant avec un ressort de rappel 75 dudit distributeur 70 pour piloter la position du distributeur.

Dans une première position du deuxième distributeur 70, lorsque le deuxième barillet 21 n'est pas entraîné en rotation, aucun fluide circule sur l'entrée 71 de sorte que l'entrée de commande 74 n'est pas alimentée en fluide. Dans cette position, l'entrée 71 est bouchée et les première et deuxième sorties 72, 73 sont reliées entre elles.

Dans une deuxième position, lorsque le deuxième barillet 21 est entraîné en rotation et alimente en fluide l'entrée 71 dudit distributeur 70, l'entrée de commande 74 alimentée en fluide coopère avec le ressort de rappel 75 de sorte que l'entrée 71 alimente la deuxième sortie 73 du distributeur 70 pour alimenter la deuxième chambre 17 du vérin 11, la première sortie 72 étant bouchée.

Les moyens de régulation 13 permettent d'alimenter l'une ou l'autre des chambres 16, 17 du vérin 11 selon le barillet 20, 21 entraîné en rotation.

Le fluide hydraulique contenu dans la chambre du vérin 11 qui n'est pas alimenté est refoulé par l'entrée 51 dans le troisième carter 41.

Les moyens de régulation 13 sont pilotés par la pression du fluide hydraulique débité par la pompe 12 de sorte qu'il n'est pas nécessaire d'implémenter dans la partie tournante (arbre de propulsion 7) des organes de commande nécessitant d'être reliés à des organes de pilotage disposés dans la partie fixe du turbopropulseur tels qu'un calculateur.

Comme le vérin 11, le troisième carter 41 de la pompe 12 et les moyens de régulation 13 du système hydraulique 4 formant un circuit fermé tournent à la vitesse de rotation de l'hélice 3, le système ne nécessite pas l'implémentation d'un joint tournant hydraulique.

De plus, le circuit fermé est indépendant d'un circuit de lubrification du turbopropulseur de sorte qu'il fonctionne de manière indépendante des autres organes hydrauliques de l'aéronef minimisant les risques de défaillances dudit systèmes lors de la défaillance des autres organes hydrauliques de l'aéronef.

En outre, comme la pompe 12 est entraînée en rotation par le moteur électrique 38 situé sur la partie fixe du turbopropulseur, le système ne nécessite pas de joint tournant électrique.

De plus, comme la vitesse de rotation du troisième carter est décorrélée de la vitesse de rotation de l'arbre de transmission 28, le moteur électrique 38 tourne à une vitesse de rotation inférieure à celle de l'hélice 3 de sorte qu'il consomme moins d'énergie électrique améliorant le rendement énergétique du système 4.

Les moyens d'embrayage 29, 30 entraînent seulement l'un des barillets selon le sens de rotation de l'arbre de transmission 28 de sorte que l'autre barillet n'est pas entraîné empêchant qu'il soit soumis à des phénomènes de cavitation.

De plus les moyens d'embrayage 29, 30 réalisés à partir de roues libres sont simples à réaliser.

L'accumulateur 64 est relié à une extrémité du clapet 63, l'autre extrémité du clapet étant relié à la troisième entrée 58 des moyens de régulation 13.

L'accumulateur 64 est dimensionnée de manière à former une référence de basse pression pour le circuit hydraulique fermé.

L'accumulateur 64 coopère avec le clapet 63 de manière à compenser les fuites dans le circuit fermé et absorber les variations de températures dans le circuit fermé.

## Revendications

1. Pompe (12) hydraulique réversible pour le calage de pas d'hélice (3) d'un turbopropulseur (2) comprenant deux barillets (20, 21) reliés par un arbre de transmission (28), **caractérisée en ce que** les premier et deuxième barillets (20, 21) sont reliés à l'arbre de transmission (28) par l'intermédiaire de premiers et deuxièmes moyens d'embrayage (29, 30) de sorte que lorsque l'arbre de transmission tourne dans un premier sens, seul le premier barillet est entrainé en rotation par l'arbre de transmission, et de sorte que lorsque l'arbre de transmission tourne dans un deuxième sens opposé au premier sens, seul le deuxième barillet est entrainé en rotation par l'arbre de transmission.

2. Pompe selon la revendication 1, dans laquelle les premiers moyens d'embrayage (29) comprennent une première roue (31) libre reliant le premier barillet (20) à l'arbre de transmission (28) lorsque l'arbre de transmission tourne dans le premier sens et désaccouple le premier barillet de l'arbre de transmission lorsque l'arbre de transmission tourne dans le deuxième sens, et les deuxièmes moyens d'embrayage (30) comprennent une deuxième roue libre reliant le deuxième barillet (21) à l'arbre de transmission lorsque l'arbre de transmission tourne dans le deuxième sens et désaccouple le deuxième barillet de l'arbre de transmission lorsque l'arbre de transmission tourne dans le premier sens.

3. Pompe selon l'une des revendications 1 et 2, comprenant en outre deux plateaux (18, 19) en biais symétriques et opposés, et deux carters (35, 36), le premier carter logeant le premier plateau et le premier barillet, et le deuxième carter logeant le deuxième plateau et le deuxième barillet, les premier et deuxième plateaux et les premier et deuxième carter étant fixes par rapport à l'arbre de transmission, des axes centraux des plateaux et des barillets étant coaxiaux.

4. Pompe hydraulique selon la revendication 3, dans laquelle le deuxième carter comprend en outre un moteur électrique (38) pour entraîner l'arbre de transmission (28), le moteur comportant un rotor (39) formé sur l'arbre de transmission et un stator (40) solidaire du deuxième carter.

5. Pompe selon l'une quelconque des revendications 1 à 4, dans laquelle chaque barillet comprend des alésages (22, 23) et des cylindres (26) creux coulissant dans les alésages lorsque ledit barillet est animé d'un mouvement de rotation, chaque cylindre (26) creux comportant un perçage radial (52) et un clapet d'aspiration (53) de sorte qu'un fluide hydraulique s'écoule dans au moins un cylindre creux par l'intermédiaire du perçage et du clapet d'aspiration lors d'une phase d'aspiration du fluide dans ledit barillet par le cylindre creux.

6. Pompe selon l'une quelconque des revendications 1 à 4, dans laquelle chaque barillet comprend des alésages (22, 23) et des cylindres (26) creux coulissant dans les alésages lorsque ledit barillet est animé d'un mouvement de rotation, chaque cylindre (26) creux comportant un perçage radial (54), la course du cylindre creux dans l'alésage (22) associé au cylindre creux et la position du perçage radial dans le cylindre creux étant choisies de sorte qu'un fluide hydraulique s'écoule dans au moins un cylindre creux par l'intermédiaire du perçage lors de d'une phase d'aspiration du fluide dans ledit barillet par le cylindre creux, et de sorte que le perçage dudit cylindre est recouvert par l'alésage associé audit cylindre creux pendant une phase de compression du fluide dans ledit barillet et une phase de refoulement du fluide hors dudit barillet par le cylindre creux.

7. Pompe selon l'une des revendications 5 et 6, comprenant des patins (27) de glissement, les cylindres creux du premier barillet (20) prenant appui sur le premier plateau (18) par l'intermédiaire de patins (27) de glissement, et les cylindres creux du deuxième barillet (21) prenant appui sur le deuxième plateau (19) par l'intermédiaire des patins (27) de glissement, la pompe comprenant en outre un troisième carte (41) cylindrique logeant les premier et deuxième carters (35, 36), et destiné à contenir le fluide hydraulique aspiré lors de la phase d'aspiration, un axe central du troisième carter et un axe central de chaque plateau étant coaxiaux, le troisième carter tournant autour des premiers et deuxième carters et comportant deux glaces (44, 45) de distribution situées chacune à l'extrémité d'un barillet différent opposée à l'extrémité dudit barillet en regard d'un plateau (18, 19), chaque glace de distribution cylindrique comprenant une rainure (46, 47) concentrique reliée à une sortie (48, 49) différente du carter, chaque extrémité du cylindre creux opposée à l'extrémité dudit cylindre creux en contact avec un patin (27) de glissement comprenant un clapet de refoulement (50) de sorte que lors de la phase de refoulement, du fluide hydraulique sous pression comprimé par les cylindres creux de l'un des premier et deuxième barillets s'échappe du carter par l'une des sorties du carter reliée audit barillet, le troisième carter comprenant en outre une entrée (51) destinée à alimenter le carter en fluide hydraulique.

8. Système hydraulique (4) pour le calage de pas d'hélice (3) d'un turbopropulseur (2) comprenant une pompe (12) hydraulique réversible selon la revendication 7, un vérin (11) hydraulique double effet comportant deux entrées (160, 170) reliées chacune à une chambre (16, 17) différente du vérin et configuré pour entraîner un dispositif mécanique (5) de calage de pas d'hélice, chaque entrée du vérin étant reliée à une sortie (48, 49) différente du troisième carter (41) par l'intermédiaire de moyens de régulation (13) de fluide hydraulique, et l'entrée (51) du troisième carter (41) étant reliée aux entrées du vérin par l'intermédiaire des moyens de régulation, les moyens de régulation étant configurés pour relier une première sortie (48) du troisième carter (41) à une première entrée (160) du vérin et pour relier la deuxième entrée (170) du vérin à l'entrée (51) du troisième carter (41)lorsque du fluide hydraulique sous pression s'écoule à travers la première sortie (48), et étant configurés pour relier la deuxième sortie (49) du troisième carter (41) à la deuxième entrée (170) du vérin et pour relier la première entrée (160) du vérin à l'entrée (51) du troisième carter (41) lorsque du fluide hydraulique sous pression s'écoule à travers la deuxième sortie.

9. Turbopropulseur (2) comprenant une hélice (3) de propulsion reliée à un dispositif mécanique (5) de calage de pas d'hélice et un système hydraulique (4) selon la revendication 8, le vérin étant relié au dispositif mécanique de calage de pas d'hélice.

10. Turbopropulseur selon la revendication 9, comprenant en outre des moyens de commande (55) configurés pour commander le moteur électrique selon une valeur de consigne (CONS) et l'angle de calage de l'hélice.

11. Aéronef (1) comportant un turbopropulseur (2) selon la revendication 9 ou 10.

## Patentansprüche

1. Umkehrbare Hydraulikpumpe (12) zum Verstellen der Propeller (3) eines Turbopropellers (2), umfassend zwei Trommeln (20, 21), die durch eine Antriebswelle (28) verbunden sind, **dadurch gekennzeichnet, dass** die erste und zweite Trommel (20, 21) über erste und zweite Kupplungsmittel (29, 30) mit der Antriebswelle (28) verbunden sind, so dass, wenn sich die Antriebswelle in eine erste Richtung dreht, nur die erste Trommel von der Antriebswelle in Drehung angetrieben wird, und so dass, wenn sich die Antriebswelle in eine zweite Richtung entgegengesetzt zu der ersten Richtung dreht, nur die zweite Trommel von der Antriebswelle in Drehung angetrieben wird.

2. Pumpe nach Anspruch 1, wobei die ersten Kupplungsmittel (29) ein erstes Freilaufrad (31) umfassen, das die erste Trommel (20) mit der Antriebswelle (28) verbindet, wenn sich die Antriebswelle in der ersten Richtung dreht, und die erste Trommel von der Antriebswelle entkoppelt, wenn sich die Antriebswelle in der zweiten Richtung dreht, und die zweiten Kupplungsmittel (30) ein zweites Freilaufrad umfassen, das die zweite Trommel (21) mit der Antriebswelle verbindet, wenn sich die Antriebswelle in die zweite Richtung dreht, und die zweite Trommel von der Antriebswelle entkoppelt, wenn sich die Antriebswelle in die erste Richtung dreht.

3. Pumpe nach einem der Ansprüche 1 und 2, weiter umfassend zwei symmetrisch und gegenüberliegend schräg angeordnete Platten (18, 19) und zwei Gehäuse (35, 36), wobei das erste Gehäuse die erste Platte und die erste Trommel aufnimmt und das zweite Gehäuse die zweite Platte und die zweite Trommel aufnimmt, wobei die erste und zweite Platte und das erste und zweite Gehäuse in Bezug auf die Antriebswelle feststehen, wobei die Mittelachsen der Platten und Trommeln koaxial sind.

4. Hydraulikpumpe nach Anspruch 3, wobei das zweite Gehäuse ferner einen Elektromotor (38) zum Antrieb der Antriebswelle (28) umfasst, wobei der Motor einen auf der Antriebswelle ausgebildeten Rotor (39) und einen Stator (40), der fest mit dem zweiten Gehäuse verbunden ist, umfasst.

5. Pumpe nach einem der Ansprüche 1 bis 4, wobei jede Trommel Bohrungen (22, 23) und hohle Zylinder (26) umfasst, die in den Bohrungen gleiten, wenn die Trommel von einer Drehbewegung angetrieben wird, wobei jeder hohle Zylinder (26) eine radiale Bohrung (52) und ein Ansaugventil (53) aufweist, so dass bei einer Ansaugphase des Fluids in der Trommel durch den hohlen Zylinder ein Hydraulikfluid durch die Bohrung und das Ansaugventil in mindestens einen hohlen Zylinder fließt.

6. Pumpe nach einem der Ansprüche 1 bis 4, wobei jede Trommel Bohrungen (22, 23) und hohle Zylinder (26) umfasst, die in den Bohrungen gleiten, wenn die Trommel durch eine Drehbewegung angetrieben wird, wobei jeder hohle Zylinder (26) eine radiale Bohrung (54) aufweist, wobei der Hub des hohlen Zylinders in der Bohrung (22) in Verbindung mit dem hohlen Zylinder und die Position der radialen Bohrung in dem hohlen Zylinder so gewählt sind, dass ein Hydraulikfluid in mindestens einen hohlen Zylinder durch die Bohrung bei einer Ansaugphase des Fluids in der Trommel durch den hohlen Zylinder fließt, und so, dass die Bohrung des Zylinders während einer Phase der Kompression des Fluids in der Trommel und einer Phase des Ausstoßens des Fluids aus der Trommel durch den hohlen Zylinder durch die mit dem hohlen Zylinder verbundene Bohrung abgedeckt wird.

7. Pumpe nach einem der Ansprüche 5 und 6, umfassend Gleitschuhe (27), wobei die hohlen Zylinder der ersten Trommel (20) über Gleitschuhe (27) auf der ersten Platte (18) aufliegen und die hohlen Zylinder der zweiten Trommel (21) über Gleitschuhe (27) auf der zweiten Platte (19) aufliegen, wobei die Pumpe ferner eine dritte zylindrische Karte (41) umfasst, die das erste und zweite Gehäuse (35, 36) aufnimmt und dazu bestimmt ist, das während der Ansaugphase angesaugte Hydraulikfluid aufzunehmen, wobei eine Mittelachse des dritten Gehäuses und eine Mittelachse jeder Platte koaxial sind, wobei sich das dritte Gehäuse um das erste und zweite Gehäuse dreht und zwei Verteilerscheiben (44, 45) aufweist, die sich jeweils am Ende einer anderen Trommel entgegengesetzt dem Ende der Trommel gegenüber einer Platte (18, 19) befinden, wobei jede zylindrische Verteilerscheibe eine konzentrische Nut (46, 47) umfasst, die mit einem anderen Ausgang (48, 49) des Gehäuses verbunden ist, wobei jedes Ende des hohlen Zylinders entgegengesetzt dem Ende des hohlen Zylinders in Kontakt mit einem Gleitschuh (27) steht, der ein Stoßventil (50) umfasst, so dass während der Förderphase das von den hohlen Zylindern einer der ersten und zweiten Trommeln verdichtete unter Druck stehende Hydraulikfluid über einen der mit dieser Trommel verbundenen Ausgänge des Gehäuses aus dem Gehäuse austritt, wobei das dritte Gehäuse ferner einen Eingang (51) umfasst, der dazu bestimmt ist, das Gehäuse mit Hydraulikfluid zu versorgen.

8. Hydrauliksystem (4) zum Verstellen der Propeller (3) eines Turbopropellers (2), umfassend eine umkehrbare Hydraulikpumpe (12) nach Anspruch 7, einen doppeltwirkenden Hydraulikzylinder (11) mit zwei Eingängen (160, 170), die jeweils mit einer anderen Kammer (16, 17) des Zylinders verbunden sind und so eingerichtet sind, dass sie eine mechanische Vorrichtung (5) zum Verstellen des Propellers antreibt, wobei jeder Eingang des Zylinders mit einem anderen Ausgang (48, 49) des dritten Gehäuses (41) über Regelmittel (13) für Hydraulikfluid verbunden ist, und der Eingang (51) des dritten Gehäuses (41) über die Regelmittel mit den Eingängen des Zylinders verbunden ist, wobei die Regelmittel so eingerichtet sind, dass sie einen ersten Ausgang (48) des dritten Gehäuses (41) mit einem ersten Eingang (160) des Zylinders verbinden und den zweiten Eingang (170) des Zylinders mit dem Eingang (51) des dritten Gehäuses (41) verbinden, wenn Hydraulikfluid unter Druck durch den ersten Ausgang (48) fließt, und so eingerichtet sind, dass sie den zweiten Ausgang (49) des dritten Gehäuses (41) mit dem zweiten Eingang (170) des Zylinders verbinden und den ersten Eingang (160) des Zylinders mit dem Eingang (51) des dritten Gehäuses (41) verbinden, wenn Hydraulikfluid unter Druck durch den zweiten Ausgang fließt.

9. Turbopropeller (2), umfassend einen Propeller (3) für den Vortrieb, der mit einer mechanischen Vorrichtung (5) zum Verstellen der Propeller und einem Hydrauliksystem (4) nach Anspruch 8 verbunden ist, wobei der Zylinder mit der mechanischen Vorrichtung zum Verstellen der Propeller verbunden ist.

10. Turbopropeller nach Anspruch 9, weiter umfassend Steuermittel (55), die so eingerichtet sind, dass sie den Elektromotor gemäß einem Sollwert (CONS) und dem Stellwinkel des Propellers steuern.

11. Luftfahrzeug (1) mit einem Turbopropeller (2) nach Anspruch 9 oder 10.

## Claims

1. A reversible hydraulic pump (12) for setting the pitch of a propeller (3) of a turboprop (2) comprising two barrels (20, 21) connected by a transmission shaft (28), **characterised in that** the first and second barrels (20, 21) are connected to the transmission shaft (28) via first and second clutch means (29, 30) so that, when the transmission shaft rotates in a first direction, only the first barrel is rotatably driven by the transmission shaft, and so that, when the transmission shaft rotates in a second direction opposite to the first direction, only the second barrel is rotatably driven by the transmission shaft.

2. The pump according to claim 1, wherein the first clutch means (29) comprise a first flywheel (31) connecting the first barrel (20) to the transmission shaft (28) when the transmission shaft rotates in the first direction and uncouples the first barrel from the transmission shaft when the transmission shaft rotates in the second direction, and the second clutch means (30) comprise a second flywheel connecting the second barrel (21) to the transmission shaft when the transmission shaft rotates in the second direction and uncouples the second barrel from the transmission shaft when the transmission shaft rotates in the first direction.

3. The pump according to one of claims 1 and 2, further comprising two symmetrical and opposite angled plates (18, 19), and two casings (35, 36), the first casing accommodating the first plate and the first barrel, and the second casing accommodating the second plate and the second barrel, the first and second plates and the first and second casings being fixed with respect to the transmission shaft, central axes of the plates and of the barrels being coaxial with each other.

4. The hydraulic pump according to claim 3, wherein the second casing further comprises an electric motor (38) to drive the transmission shaft (28), the motor including a rotor (39) formed on the transmission shaft and a stator (40) integral with the second casing.

5. The pump according to any one of claims 1 to 4, wherein each barrel comprises bores (22, 23) and hollow cylinders (26) sliding in the bores when said barrel is rotationally moving, each hollow cylinder (26) including a radial aperture (52) and a suction valve (53) so that a hydraulic fluid flows into at least one hollow cylinder via the aperture and the suction valve during a phase of sucking the fluid into said barrel by the hollow cylinder.

6. The pump according to any one of claims 1 to 4, wherein each barrel comprises bores (22, 23) and hollow cylinders (26) sliding in the bores when said barrel is rotationally moving, each hollow cylinder (26) comprising a radial aperture (54), the stroke of the hollow cylinder in the bore (22) associated with the hollow cylinder and the position of the radial aperture in the hollow cylinder being selected so that a hydraulic fluid flows into at least one hollow cylinder via the aperture during a phase of sucking the fluid into said barrel by the hollow cylinder, and so that the aperture of said cylinder is covered by the bore associated with said hollow cylinder during a phase of compressing the fluid into said barrel and a phase of discharging the fluid out of said barrel by the hollow cylinder.

7. The pump according to one of claims 5 and 6, comprising sliding pads (27), the hollow cylinders of the first barrel (20) bearing on the first plate (18) via sliding pads (27), and the hollow cylinders of the second barrel (21) bearing on the second plate (19) via the sliding pads (27), the pump further comprising a third cylindrical casing (41) accommodating the first and second casings (35, 36), and intended to contain the hydraulic fluid sucked in during the suction phase, a central axis of the third casing and a central axis of each plate being coaxial with each other, the third casing rotating about the first and second casings and comprising two port plates (44, 45) each located at the end of a different barrel opposite to the end of said barrel facing a plate (18, 19), each cylindrical port plate comprising a concentric groove (46, 47) connected to a different outlet (48, 49) of the casing, each end of the hollow cylinder opposite to the end of said hollow cylinder in contact with a sliding pad (27) comprising a discharge valve (50) so that, during the discharge phase, pressurised hydraulic fluid compressed by the hollow cylinders of one among the first and second barrels escapes from the casing via one of the outlets of the casing connected to said barrel, the third casing further comprising an inlet (51) intended to supply the casing with hydraulic fluid.

8. A hydraulic system (4) for setting the pitch of a propeller (3) of a turboprop (2) comprising a reversible hydraulic pump (12) according to claim 7, a double-acting hydraulic ram (11) including two inlets (160, 170) each connected to a different chamber (16, 17) of the ram and configured to drive a mechanical propeller pitch setting device (5), each inlet of the ram being connected to a different outlet (48, 49) of the third casing (41) via hydraulic fluid regulation means (13), and the inlet (51) of the third casing (41) being connected to the inlets of the ram via the regulation means, the regulation means being configured to connect a first outlet (48) of the third casing (41) to a first inlet (160) of the ram and to connect the second inlet (170) of the ram to the inlet (51) of the third casing (41) when pressurised hydraulic fluid flows through the first outlet (48), and being configured to connect the second outlet (49) of the third casing (41) to the second inlet (170) of the ram and to connect the first inlet (160) of the ram to the inlet (51) of the third casing (41) when pressurised hydraulic fluid flows through the second outlet.

9. A turboprop (2) comprising a propulsion propeller (3) connected to a mechanical propeller pitch setting device (5) and a hydraulic system (4) according to claim 8, the ram being connected to the mechanical propeller pitch setting device.

10. The turboprop according to claim 9, further comprising control means (55) configured to control the electric motor according to a setpoint value (CONS) and the pitch angle of the propeller.

11. An aircraft (1) including a turboprop (2) according to claim 9 or 10.
